# EUROPEAN PATENT APPLICATION

(11) **EP 4 749 146 A1**
(43) Date of publication of application: **27.05.2026**
(21) Application number: 25217318.2
(22) Date of filing: 20.11.2025
(51) Int. Cl.: F16B 37/06

(54) **STUD FOR TOP MOUNT ASSEMBLY AND METHOD**

(30) Priority: 22.11.2024 US 202418956957
(71) Applicant: Vibracoustic USA, Inc., South Haven, MI 49090 (US)
(72) Inventor: PNIEWSKI, Garrett, Bloomfield Hills (US); KAPELA, Nicholas, Otsego (US)
(74) Representative: Patentanwälte Olbricht Buchhold Keulertz

(57) **Abstract**

A stud (10) for a top mount assembly (100), such as an air spring assembly, includes an upper portion (12) and a lower connecting portion (14). The lower connecting portion (14) may include a plurality of connecting projections (16) that extend a distance (X) in a longitudinal direction. With embodiments, the lower connecting portion (14) may include an undercut (18) that may extend around or substantially around a circumference of the lower connecting portion (14). An assembly (100) for a top mount may include a stud (10) and a flange or component connection portion (40), wherein the flange or component connection portion (40) may be connected to the stud (10) via the plurality of connecting projections (16). Methods for connecting a stud (10) to a flange or component connection portion (40) are also disclosed.

## Description

### TECHNICAL FIELD

The present disclosure generally relates to studs for top mount assemblies or top mounts, such as top mounts of air spring flanges or air spring assemblies, including those suitable for use with vehicles.

### BACKGROUND

This background description is set forth below for the purpose of providing context only. Therefore, any aspect of this background description, to the extent that it does not otherwise qualify as prior art, is neither expressly nor impliedly admitted as prior art against the instant disclosure.

Top mount assemblies, such as air spring assemblies, are commonly employed in various types of vehicles to provide cushioning and/or support. Top mount assemblies may involve a flange or component connection portion, which can serve, among other things, as a mounting interface between a damper, a strut, or an air spring and a component of a vehicle, such as a component associated with a vehicle chassis or suspension.

With top mount assemblies, a stud may be used to attach or secure the upper component, such as an air spring flange, to another component. Such studs may be inserted through a flange or component connection portion and may then be secured, for example, via coil or thread locker. Some conventional designs may not provide a desired measure of damping, may be relatively complex, and/or may be expensive to produce.

Conventional studs are typically threaded, whether with or without a helical coil and/or thread locker. However, the height of a threaded bore can take up valuable space, require time-consuming assembly processes, and may not meet future requirements of stud loosening torque.

A possible disadvantage with conventional assemblies with a threaded bore in connection with a joint comprising a metal, such as aluminum or steel, common practices may necessitate a height of threads equal to 1.5 to 2.5 times the thread diameter or addition of a helical and/or thread locker. An associated packaging to meet required thread height may limit design flexibility, take up valuable packaging space, and/or require a cap to be larger, heavier, or more expensive. In some instances, addition of a helical insert to a flange can reduce packaging requirements, but may add additional material cost and assembly time and cost. Moreover, with current trends toward larger and heavier battery powered vehicles, it can become increasingly challenging to meet application loosening torque requirements for a stud in a flange or component connection portion.

There is a need for an improved stud design for top mount assemblies that may address such issues and may provide enhanced strength, resistance to environmental conditions, and/or ease of installation and maintenance. The foregoing discussion is intended only to illustrate examples of the present field and should not be taken as a disavowal of scope.

### SUMMARY

A stud for a top mount assembly, such as for an air spring assembly, includes an upper portion and a lower connecting portion. The lower connecting portion may include a plurality of connecting projections that extend a distance in a longitudinal direction. With embodiments, the lower connecting portion may include an undercut that may extend around or substantially around a circumference of the lower connecting portion. An assembly for top mount assembly, such as an air spring, may include a stud and a flange or component connection portion. The flange or component connection portion may be connected to the stud via the plurality of connecting projections. Methods for connecting a stud to a flange or component connection portion are also disclosed.

The foregoing and other aspects, features, details, utilities, and/or advantages of embodiments of the present disclosure will be apparent from reading the following description, and from reviewing the accompanying drawings.

In another embodiment of a stud for a top mount assembly the lower connecting portion includes an undercut.

In another embodiment of a stud for a top mount assembly the undercut may extend around a circumference of the lower connecting portion.

In another embodiment of a stud for a top mount assembly the lower connecting portion may be devoid of threads.

In another embodiment of a stud for a top mount assembly the upper portion may include at least a partial thread.

In another embodiment of a stud for a top mount assembly the upper portion may have an outer diameter, and the distance that the plurality of connecting projections may extend in the longitudinal direction may be substantially the same as the outer diameter.

In another embodiment of a stud for a top mount assembly the upper portion may have an outer diameter, and the distance that the plurality of connecting projections may extend in the longitudinal direction may be less than the outer diameter.

In another embodiment of a stud for a top mount assembly the plurality of connecting projections may be provided in series in a ring-like configuration, and/or the plurality of connecting projections may comprise a plurality of knurled formations and/or the plurality of connecting projections may include a sharpened or puncture-facilitating edge or end portion.

In another embodiment of a stud for a top mount assembly the stud may comprise of metal, preferably steel.

Another aspect of the invention relates to an assembly for a top mount comprising a stud, a flange or component connection portion wherein the stud includes a lower connecting portion; the lower connecting portion includes a plurality of connecting projections that extend a distance in a longitudinal direction; and a portion of the plurality of connecting projections extend into the flange or component connection portion and connect the stud to the flange or component connection portion. Said stud may be a stud as disclosed herein.

In another embodiment of the assembly for a top mount the flange or component connection portion may comprise of aluminum.

In another embodiment of the assembly for a top mount the flange or component connection portion may include a deformation ring; the stud may include an axial undercut; and, in connection with the assembly of the stud and the flange or component connection portion, the deformation ring may plastically deform into the axial undercut.

In another embodiment of the assembly for a top mount the flange or component connection portion may comprise of a first material, the stud may comprise of a second material that is different than the first material, and the second material may be harder than the first material.

In another embodiment of the assembly for a top mount the plurality of connecting projections may be provided in series in a ring-like configuration and/or may extend a penetration distance into the flange or component connection portion.

In another embodiment of the assembly for a top mount the penetration distance may be less than a diameter of the stud, preferably less than about 5 mm.

Another aspect of the invention relates to a method of making an assembly for an air spring, comprising: providing a stud including a lower connecting portion having a plurality of connecting projections that extend a distance in a longitudinal direction; providing a flange or component connection portion; and pressing or forcing the plurality of connecting projections of the lower connecting portion into a portion of the flange or component connection portion a penetrating distance to connect or secure the stud to the flange or component connection portion. Said stud may be a stud as disclosed herein. Said assembly may be an assembly as disclosed herein.

### BRIEF DESCRIPTION OF THE DRAWINGS

**FIG. 1** is a side view generally illustrating an embodiment of a stud according to teachings of the present disclosure.
**FIG. 2** is side view with partial cross-section generally illustrating a portion of an assembly, including a stud and a portion of a flange or component connection portion, according to teachings of the present disclosure.
**FIG. 3** is a side view with partial cross-section generally illustrating a portion of an assembly, including a stud and a portion of a flange or component connection portion, according to teachings of the present disclosure.

### DETAILED DESCRIPTION

Reference will now be made in detail to embodiments of the present disclosure, examples of which are described herein and illustrated in the accompanying drawings. While the present disclosure will be described in conjunction with embodiments and/or examples, it will be understood that they are not intended to limit the present disclosure to these embodiments and/or examples. On the contrary, the present disclosure is intended to cover alternatives, modifications, and equivalents.

Embodiments of the disclosure involve the utilization of staked studs in metal (e.g., aluminum or steel) flanges (or pots) that can comparatively reduce packaging height and/or cost, and may provide a robust design suitable to meet application requirements.

With the staking of a stud into a flange or component connection portion that may be comprised of a metal (e.g., aluminum or steel), associated packaging requirements may be reduced compared with packaging requirements associated with threaded bores. Whereas threading may not be involved, there would not be a need for helical or thread lockers. Further, the use of a staked stud and corresponding bore in a flange or component connection portion may reduce the height of a cap as compared to a threaded stud. As no threads are required with a staked stud, components such as helicoils and thread lockers may not be needed. Moreover, the stud, bore, and staking process can be tailored to meet pull-out and/or loosening torque requirements, such as by changing geometry of the bore/stud and/or the amount of material deformed. With some embodiments, a stud may be configured to be pressed into the flange or component connection portion. However, such embodiments may involve tight control of tolerances.

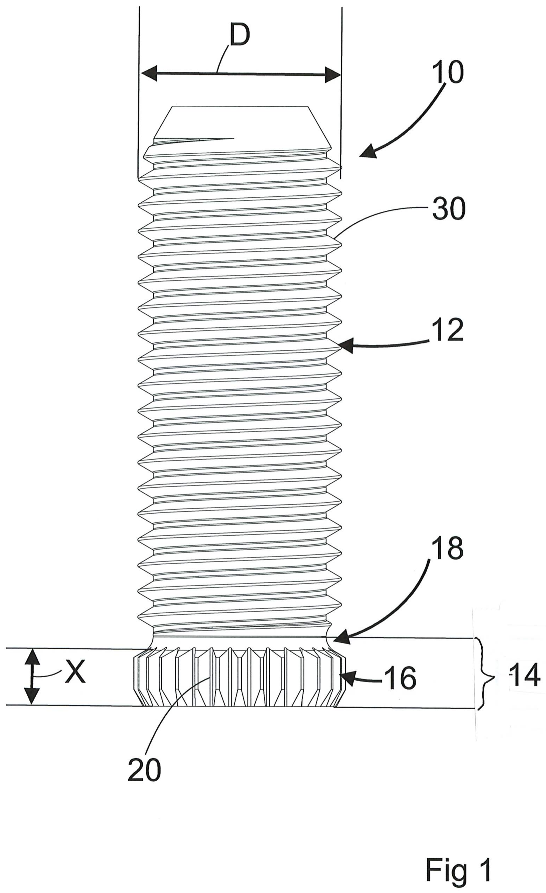

**FIG. 1** generally illustrates an embodiment of a stud 10 that may be used in connection with a top mount assembly, such as an air spring assembly. As shown, a stud 10 may comprise an upper portion 12 and a lower portion 14 that includes a plurality of connecting projections 16, which may extend radially outward and which may be fin-like or flange-like. The stud 10 may be annular along a substantial portion in a longitudinal direction. The upper portion 12 may have an outer diameter D, and the projections 16 may extend a distance X in a longitudinal direction. While the upper portion 12 of the stud 10 may appear as generally shown in FIG. 1, an upper portion 12 may instead comprise a variety of other dimensions (e.g., lengths and diameters), and distal elements/features, which may include a partial thread and/or various other conventional elements/features adapted for connection or attachment to another component.

As generally illustrated in **FIG. 1****,** a stud 10 may include an undercut 18. An undercut may comprise an axial undercut and/or may extend around significant portions, substantially all, or all of a circumference of a lower connecting portion 14. Further, the undercut and/or lower connecting portion 14 may be devoid of threads.

In the illustrated embodiment, the stud 10 may include threading or threads 30 in the upper portion 12 of the stud 10. The threads 30 may be adapted for connection to another component. However, while the illustrated embodiment generally shows threads 30 extending substantially along the longitudinal length of the upper portion 12, other embodiments may instead have threading and/or other connection features that do not extend substantially along such length.

In embodiments, an upper connecting portion may have an outer diameter D, and a distance X that the plurality of connecting projections extend in the longitudinal direction may be the same or substantially the same as the outer diameter D. In other embodiments, the distance X may be less than the outer diameter D. Further, with embodiments, distance X may be less than one-half the outer diameter D, may be about one-third of the outer diameter D, or may be less than one-third of the outer diameter D.

In embodiments, a stud 10 may be comprised of a metal that may, for example and without limitation, comprise steel.

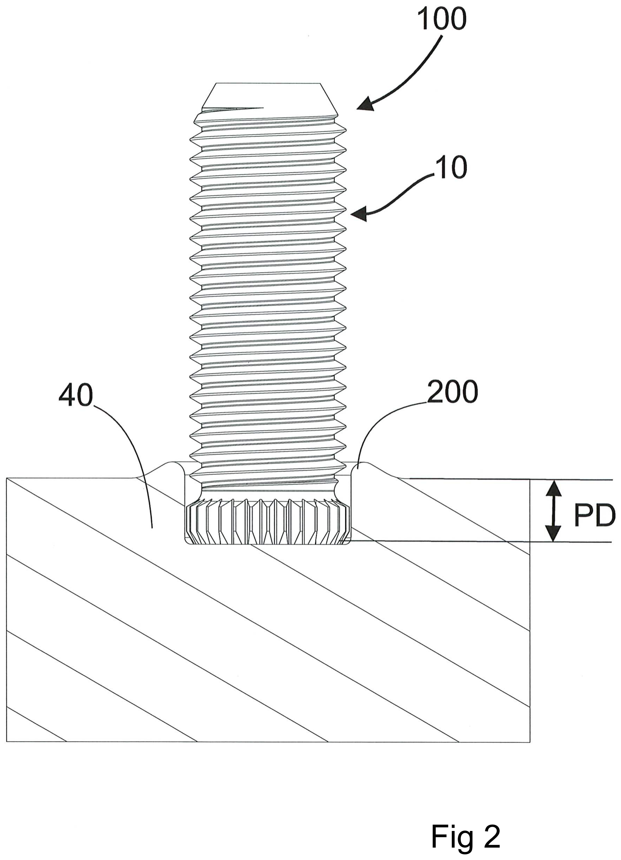

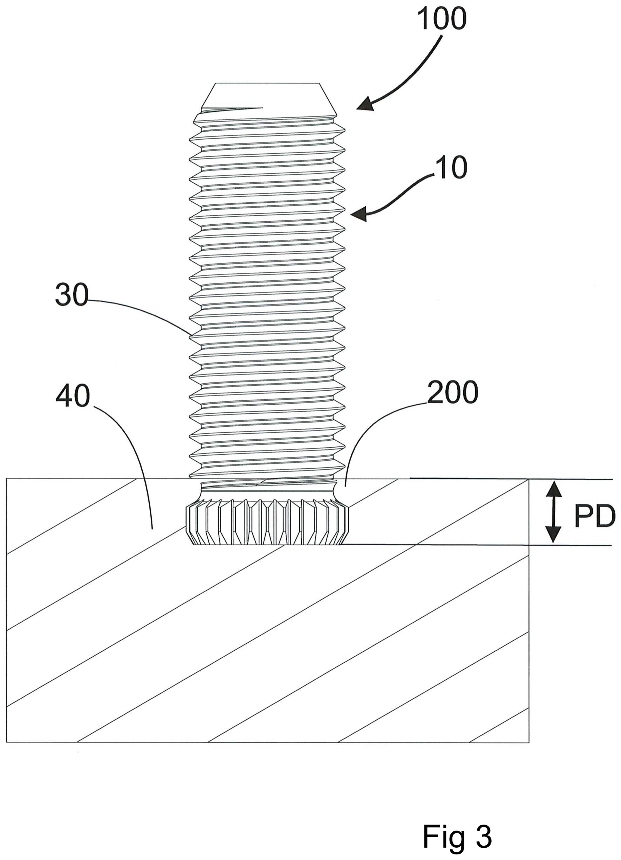

**FIGS. 2** **and** **3** generally illustrate an embodiment of a portion of an assembly 100 that may, for instance, be used in connection with a top mount (e.g., an air spring). **FIGS. 2** **and** **3** generally illustrate a portion of a stud 10 and a portion of a flange or component connection portion 40. A flange or component connection portion may include a bore and/or a portion intended for deformation (e.g., a deformation zone or ring 200) in connection with an assembly with a stud.

In embodiments, the plurality of connecting projections 16 may, for example, comprise a plurality of knurled formations. With some applications, knurling can provide added rotational control. The connecting projections 16 may be provided or disposed in an annular series or ring-like configuration. With embodiments, the plurality of connecting projections 16 may (or may not be) regularly or equidistantly spaced and/or may include a sharpened or puncture-facilitating edge or end portion 20.

With embodiments, a flange or component connection portion 40 may be comprised of metal. In embodiments, a flange or component connection portion 40 may be comprised of a forged, extruded, or die cast material and/or may be comprised of aluminum or steel. For some applications, an aluminum-comprised flange or component connection portion may provide for a shortened connection wherein a lesser depth may support comparatively high loads while providing a reduced engagement length.

For some applications, a flange or component connection portion 40 may be comprised of a first material (which may be a metal), a stud 10 may be comprised of a second material (which may be a metal) that is different than the first material, and the second material associated with the stud 10 may be harder than the first material associated with the flange or component connection portion 40.

**FIG.** 3 generally illustrates an embodiment of an assembly 100 in which a lower portion 14 of a stud 10 is inserted into a portion of a flange or component connection portion 40. The flange or component connection portion 40 may include a bore and/or a portion intended for deformation (such as a deformation zone or ring 200). In such a configuration, the plurality of connecting projections 16 may extend into or through the flange or component connection portion 40, and the stud 10 may extend a distance into or through the flange or component connection portion 40. A distance that the lower portion 14 of a stud extends into and through a flange or component connection portion 40 may be considered a penetrating distance (PD, which may comprise distance X plus an additional distance that may be associated with an undercut). In embodiments, the penetration distance may be less than an outer diameter D of the stud 10, may be about one-half the outer diameter D, or may be less than one-half the outer diameter D. In some embodiments, the penetration distance may, for example and without limitation, be less than about 5 mm. For embodiments, the penetration distance PD may comport to an industry standard or may otherwise be sufficient to provide application adequate resistance to torque-out or pullout, including in vibration applications or anticipated conditions.

With some assemblies, a press force in connection with a stud 10 will displace a portion of a flange or component connection portion 40 (e.g., an aluminum flange) to secure or retain the stud 10. In embodiments in which the lower portion 14 of a stud 10 may include an axial undercut 18, and a lower portion 14 of a stud 10 may extend into or through a flange or component connection portion 40 such that, in an assembled or engaged configuration, a portion of the flange or component connection portion 40 (e.g., a portion that is intended for deformation) may extend into the undercut 18 to retain or secure a portion of the stud 10 to the flange or component connection portion 40.

As shown in **FIG. 3****,** the lower portion 14, including the projections 16, may penetrate into the flange 40, and material associated with the flange or component connection portion 40 may engage an undercut 18 of the stud 10 to retain the lower portion 14 of the stud within a portion of the flange or component connection portion 40. Threads 30 (or another connecting element of the secured stud) may then extend outwardly from the flange or component connection portion.

Various embodiments are described herein for various apparatuses, systems, and/or methods. Numerous specific details are set forth to provide a thorough understanding of the overall structure, function, manufacture, and use of the embodiments as described in the specification and illustrated in the accompanying drawings. It will be understood by those skilled in the art, however, that the embodiments may be practiced without such specific details. In other instances, well-known operations, components, and elements have not been described in detail so as not to obscure the embodiments described in the specification. Those of ordinary skill in the art will understand that the embodiments described and illustrated herein are non-limiting examples, and thus it can be appreciated that the specific structural and functional details disclosed herein may be representative and do not necessarily limit the scope of the embodiments.

Reference throughout the specification to "various embodiments," "with embodiments," "in embodiments," or "an embodiment," or the like, means that a particular feature, structure, or characteristic described in connection with the embodiment is included in at least one embodiment. Thus, appearances of the phrases "in various embodiments," "with embodiments," "in embodiments," or "an embodiment," or the like, in places throughout the specification are not necessarily all referring to the same embodiment. Furthermore, the particular features, structures, or characteristics may be combined in any suitable manner in one or more embodiments. Thus, the particular features, structures, or characteristics illustrated or described in connection with one embodiment/example may be combined, in whole or in part, with the features, structures, functions, and/or characteristics of one or more other embodiments/examples without limitation given that such combination is not illogical or non-functional. Moreover, many modifications may be made to adapt a particular situation or material to the teachings of the present disclosure without departing from the scope thereof.

It should be understood that references to a single element are not necessarily so limited and may include one or more of such element. Any directional references (e.g., plus, minus, upper, lower, upward, downward, left, right, leftward, rightward, top, bottom, above, below, vertical, horizontal, clockwise, and counterclockwise) are only used for identification purposes to aid the reader's understanding of the present disclosure, and do not create limitations, particularly as to the position, orientation, or use of embodiments.

Joinder references (e.g., attached, coupled, connected, and the like) are to be construed broadly and may include intermediate members between a connection of elements and relative movement between elements. As such, joinder references do not necessarily imply that two elements are directly connected/coupled and in fixed relation to each other. The use of "e.g." in the specification is to be construed broadly and is used to provide non-limiting examples of embodiments of the disclosure, and the disclosure is not limited to such examples. Uses of "and" and "or" are to be construed broadly (e.g., to be treated as "and/or"). For example and without limitation, uses of "and" do not necessarily require all elements or features listed, and uses of "or" are intended to be inclusive unless such a construction would be illogical.

While processes, systems, and methods may be described herein in connection with one or more steps in a particular sequence, it should be understood that such methods may be practiced with the steps in a different order, with certain steps performed simultaneously, with additional steps, and/or with certain described steps omitted.

It is intended that all matter contained in the above description or shown in the accompanying drawings shall be interpreted as illustrative only and not limiting. Changes in detail or structure may be made without departing from the present disclosure.

## Claims

1. A stud (10) for a top mount assembly (100), comprising:
an upper portion (12); and
a lower connecting portion (14), the lower connecting portion (14) including a plurality of connecting projections (16) that extend a distance (X) in a longitudinal direction.

2. The stud (10) of claim 1, wherein the lower connecting portion (14) includes an undercut (18), preferably the undercut (18) extends around a circumference of the lower connecting portion (14).

3. The stud (10) according to any one of the preceding claims, wherein the lower connecting portion (14) is devoid of threads (30).

4. The stud (10) according to any one of the preceding claims, wherein the upper portion (12) includes at least a partial thread (30).

5. The stud (10) according to any one of the preceding claims, wherein the upper portion (12) has an outer diameter (D), and the distance (X) that the plurality of connecting projections (16) extend in the longitudinal direction is substantially the same as the outer diameter (D).

6. The stud (10) according to one of claims 1 to 4, wherein the upper portion (12) has an outer diameter (D), and the distance (X) that the plurality of connecting projections (16) extend in the longitudinal direction is less than the outer diameter (D).

7. The stud (10) according to any one of the preceding claims, wherein the plurality of connecting projections (16) are provided in series in a ring-like configuration, and/or the plurality of connecting projections (16) comprise a plurality of knurled formations and/or the plurality of connecting projections (16) include a sharpened or puncture-facilitating edge or end portion (20).

8. The stud (10) of claim 1, wherein the stud (10) is comprised of metal, preferably steel.

9. An assembly (100) for a top mount, comprising:
a stud (10); and
a flange or component connection portion (40);
wherein the stud (10) includes a lower connecting portion (14); the lower connecting portion (14) includes a plurality of connecting projections (16) that extend a distance (X) in a longitudinal direction; and a portion of the plurality of connecting projections (16) extend into the flange or component connection portion (40) and connect the stud (10) to the flange or component connection portion (40).

10. The assembly (100) of claim 9, wherein the flange or component connection portion (40) is comprised of aluminum.

11. The assembly (100) according to any one of claims 9 or 10, wherein the flange or component connection portion (40) includes a deformation ring (200); the stud (10) includes an axial undercut (18); and, in connection with the assembly (100) of the stud (10) and the flange or component connection portion (40), the deformation ring (200) plastically deformed into the axial undercut (18).

12. The assembly (100) according to any one of claims 9 to 11, wherein the flange or component connection portion (40) is comprised of a first material, the stud (10) is comprised of a second material that is different than the first material, and the second material is harder than the first material.

13. The assembly (100) according to any one of claims 9 to 12, wherein the plurality of connecting projections (16) are provided in series in a ring-like configuration and/or extend a penetration distance (PD) into the flange or component connection portion (40).

14. The assembly (100) of claim 13, wherein the penetration distance (PD) is less than a diameter (D) of the stud (10), preferably less than about 5 mm.

15. A method of making an assembly (100) for an air spring, comprising:
providing a stud (10) including a lower connecting portion (14) having a plurality of connecting projections (16) that extend a distance (X) in a longitudinal direction;
providing a flange or component connection portion (40); and
pressing or forcing the plurality of connecting projections (16) of the lower connecting portion (14) into a portion of the flange or component connection portion (40) a penetrating distance (PD) to connect or secure the stud (10) to the flange or component connection portion (40).
